Europäisches Patentamt

European Patent Office

Office européen des brevets

(19)

(11) Publication number: **0 070 670**
**B1**

(12) **EUROPEAN PATENT SPECIFICATION**

(45) Date of publication of patent specification: **09.04.86**

(51) Int. Cl.⁴: **B 60 P 1/44,** B 60 P 1/00

(21) Application number: **82303658.7**

(22) Date of filing: **13.07.82**

(54) **Palletized load transporter.**

(30) Priority: **17.07.81 GB 8122136**

(43) Date of publication of application:
**26.01.83 Bulletin 83/04**

(45) Publication of the grant of the patent:
**09.04.86 Bulletin 86/15**

(84) Designated Contracting States:
**DE FR GB IT NL SE**

(56) References cited:
**FR-A-1 494 910**
**GB-A-1 119 692**
**GB-A-1 201 836**
**US-A-3 561 627**
**US-A-4 274 789**

(73) Proprietor: **LUCAS INDUSTRIES public limited
company
Great King Street
Birmingham, B19 2XF West Midlands (GB)**

(72) Inventor: **Dickson, Harold Archibald
Beaumaris 13 Jackman Close
Fradley Lichfield, WS13 8PW (GB)**

(74) Representative: **Carpenter, David et al
Marks & Clerk Alpha Tower Suffolk Street
Queensway
Birmingham B1 1TT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to a transporter for loads carried on pallets of the kind designed to be handled by fork lift trucks and the like.

The term "transporter" as used herein is intended to include rigid deck lorries and articulated lorry trailers together with other vehicles capable of transporting palletized loads.

Often in order to maximise the load carrying efficiency of a transporter it is desirable to stack one or more palletized load units on top of one another. It is usual to make use of a pallet trolley whereby stacks of load units can be manoeuvred both on the transporter and on the ground, and a lift mechanism, for example a tail lift, whereby the trolley carrying a stack of load units can be lifted and lowered between the ground level and the bed level of the transporter. Where a complete stack is to be delivered to a particular location then the trolley and lift mechanism are sufficient handling equipment. However where not all units of the stack are to be delivered to that location then the use of a fork lift truck or the like is necessary to split the stack. Often a fork lift truck will not be available and where it is known when loading the transporter that a fork lift truck is not available at a delivery location then any parts of a stack of load units to be delivered to that location will be loaded onto the transporter as part stacks not forming portions of a complete stack. Thus one or two load units may comprise the delivery and no other units can be loaded above or below since there will be no fork lift truck available to split a stack so formed at the delivery point. It will be recognised that maximum efficiency of utilization of the transporter occurs when each stack of load units is of the predetermined maximum height. Thus where a number of part stack deliveries are to be made to locations not equipped with a fork lift truck then the transporter cannot be loaded and operated at or near its optimum efficiency, and it is an object of the present invention to provide a transporter wherein this problem is minimised.

US Patent 3561627 discloses a load carrying device in accordance with the precharacterising part of claim 1, having a fork lifting mechanism and a narrow load conveyor for receiving a load from the lifting mechanism. However US Patent 3561627 does not mention and is not concerned with problems related to stacked palletized loads.

According to the invention a transporter for palletized loads comprises a load carrying platform, and a load lifting mechanism adjacent an edge of the platform whereby load units can be raised and lowered between the platform level and ground level, a load unit support movable between a first position in which the support is clear of the path of movement of the lifting mechanism and a second position in which the support can engage a load unit carried by the lifting mechanism to support that unit said load lifting mechanism includes a load lifting platform upon which said load units are raised and lowered, and said load unit support includes a pair of spaced parallel limbs engageable with a load unit, which are required to be in said first position to permit said load lifting platform to pass during movement of the load lifting platform.

Preferably the load unit support is retractable relative to the load carrying platform from its second position to its first position, the support lying beneath the load carrying surface of the platform in its first position.

Desirably the transporter is provided with a mechanism for moving the load unit support between said first and second positions.

Preferably said mechanism for moving the load unit support is manually operable from a location adjacent the load lifting mechanism.

One example of the invention is illustrated in the accompanying drawings, wherein:—

Figures 1, 2, 3 and 4 are each a diagrammatic side elevational view of the rear end of the trailer of an articulated lorry, Figures 1 to 4 showing respectively four stages in the removal of a palletized load unit from a stack of such load units carried by the trailer,

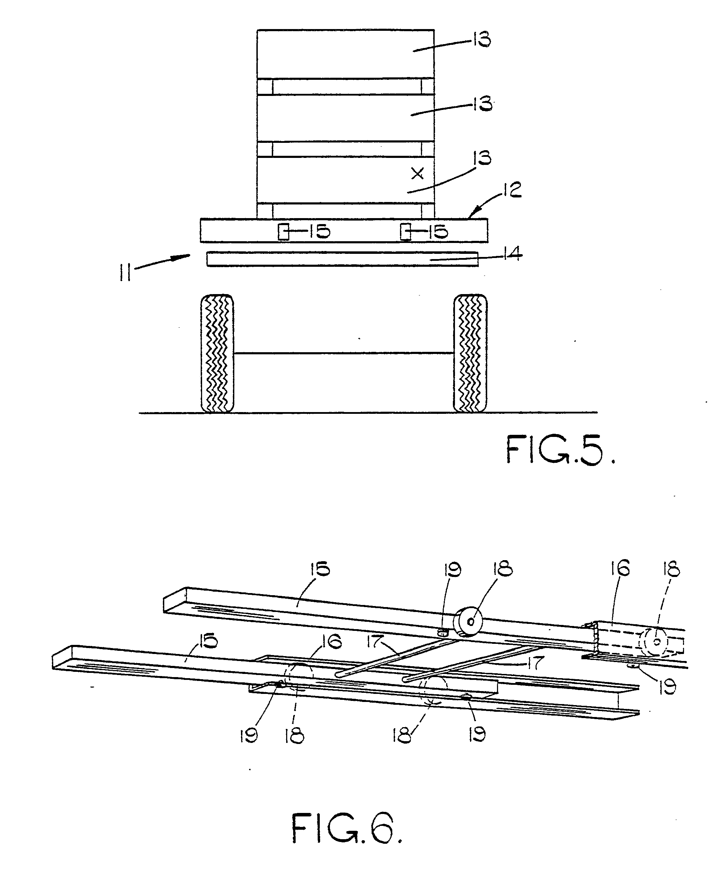

Figure 5 is a diagrammatic rear elevational view of the trailer, and

Figure 6 is a perspective, diagrammatic representation of a support structure of the trailer shown in Figures 1 to 5.

Referring to the drawings, it is to be understood that while the following example of the invention is described in relation to the trailer of an articulated lorry it could equally well have been described in relation to the deck of a non-articulated lorry, or indeed to any other vehicle for transporting palletized loads where the loads are carried on a deck above ground level and are required to be moved from the deck to ground level during unloading.

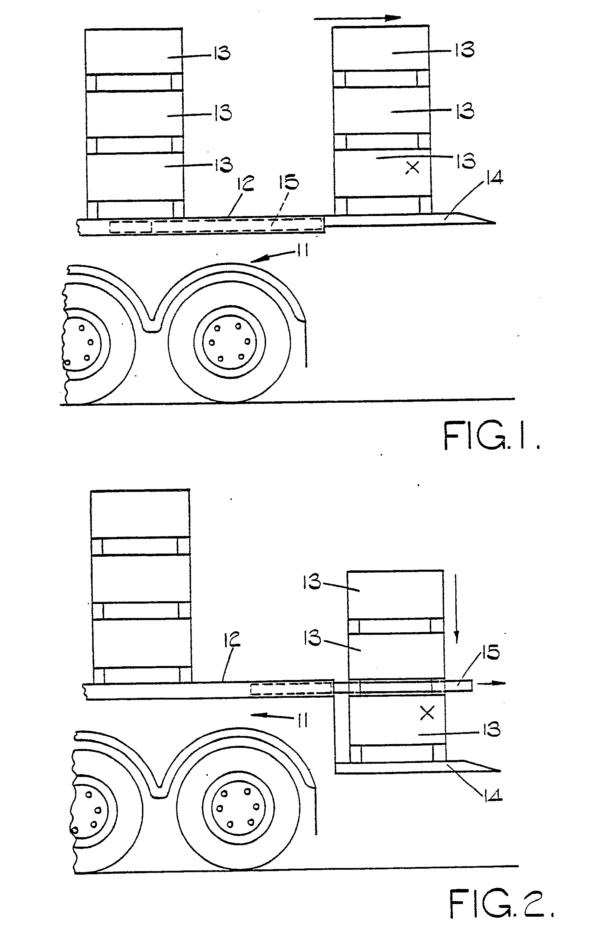

The articulated lorry includes a trailer 11 having a load carrying deck or platform 12 upon which palletized loads units 13 are supported in stacks of a convenient height. It will be recognized that the height of each stack of units is determined by the overall height of each unit, and in the example shown in the drawings each stack comprises three load units one above the other. The rearmost end of the deck 12 is provided with a lifting mechanism 14 of the kind known conveniently as a tail lift. The mechanism 14 is conventional, and comprises a horizontally disposed platform movable between ground level and the level of the deck 12 by means of a mechanical, or hydraulic lifting mechanism carried by the trailer 11. Disposed within the structure of the deck 12 at its rear end is a load support in the form of a pair of rigidly interconnected rectangular section bars 15. The bars 15 are guided within the structure of the deck 12 for longitudinal sliding movement in the direction of the length of the deck 12 between a first position (as shown in Figure 1) wherein the bars 15 are housed wholly within the deck 12 and do not obstruct the movement of the tail lift 14, and a second position (illustrated in Figure 2) wherein the bars 15 project from the rear end of the trailer and intersect the path of movement of the tail lift 14.

In Figure 1 it can be seen that the platform of the tail lift 14 has been raised so that its top surface is flush with the top surface of the deck 12 and a stack of three load units 13 has been moved horizontally from the deck 12 onto the tail lift 14. It is desired to deliver only the lowermost of the three load units 13 (marked with an X in the drawings) to a particular location. In order to accomplish the delivery of only the unit marked X the tail lift 14 is not lowered relative to the deck 12 to a position such that the pallet of the load unit 13 seated on top of the load unit X, is aligned with the bars 15 of the support. The bars 15 are then moved rearwardly from their first position to the second position so as to pass through the pallet of the load unit 13 on top of the load unit X, it being recognised that the spacing between the bars 15 is chosen to be slightly less than the spacing between the corner members of each pallet (Figure 2).

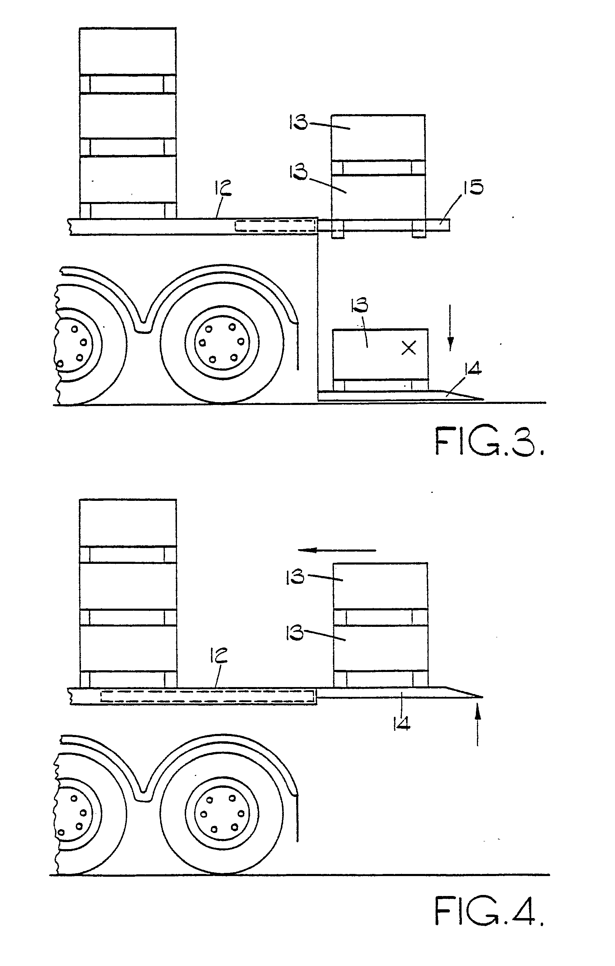

The tail lift 14 is then lowered to ground level (Figure 3) leaving the two upper load units of the stack supported by the bars 15. Thereafter the load unit X can be removed from the tail lift 14.

The tail lift 14 is now raised again to engage the pallet of the now lowermost of the stack of two load units, and is raised slightly further to remove the weight of the two load units from the bars 15. The bars 15 are then returned to their first position and, as shown in Figure 4, the tail lift is then raised further up to the level of the deck 13 so that the two remaining load units of the stack can be moved horizontally back onto the deck 12.

Conveniently, when the tail lift is not in use, the platform of the tail lift is stowed in a vertical orientation. For example, the platform of the tail lift 14 may well constitute the tail gate of the trailer 11.

In order to manoeuvre individual load units 13, or a stack of load units 13 in a horizontal plane it is usual to utilize a pallet trolley. It will be understood that a pallet trolley is a known wheeled structure having a pair of load bearing members which can be introduced into the lowermost pallet of a stack, and which can then be raised by a few inches to lift the pallet out of contact with the ground, or the deck 12, to permit the trolley to be used to manoeuvre the load unit or stack of load units.

It will be recognised that in the absence of the load supporting bars 15 then in order to deliver the lowermost load unit X of a stack of load units on the deck 12 it would be necessary to employ a fork lift truck to lift the two upper units away from the load unit X so that the load unit X could be manoeuvred onto the tail lift 14. Alternatively the fork lift truck would be employed after removal of the stack of three load units to lift the two upper load units back onto the platform 12. In either case clearly a fork lift truck is necessary, and equally clearly it would not be economically viable to carry a fork lift truck on each load unit transporter. Thus in instances where the delivery location is not equipped with a fork lift truck care must be taken when initially loading the deck 12 to ensure that the single load unit does not form part of a stack. However, since the area occupied by a single load unit on the deck 12 is exactly the same as that occupied by a stack of load units, then it is clear that the load carrying capability of the transporter is not efficiently utilized. The provision of the movable load supporting bars 15 permits the optimum utilization of the load carrying capabilities of the transporter by permitting the incorporation into stacks of load units which are to be delivered singularly to locations not equipped with fork lift trucks.

Where a single load unit is to be delivered to a particular location then conveniently it will be positioned as the lowermost load unit of a stack. However, even if the load unit is not the lowermost one of a stack it can nevertheless still be delivered without the use of a fork lift truck. For example, left us assume that the load unit to be delivered is the centre one of a stack of three, then the lowermost one will be removed from the stack as described above, and will then be put on one side. Rather than returning the remaining stack of two back to the deck 12 from the tail lift platform the tail lift platform will be lowered so that the bars 15 can once again be extended in a rearward direction, but in this instance to pass between the remaining two units. The topmost unit will then be supported by the bars and the middle unit, to be delivered to this location, will be lowered to ground level on the tail lift 14 for removal, conveniently, by means of a pallet trolley. The original lowermost load unit will then be replaced on the tail lift which will then be raised so that the load unit carried by the bars 15 is slightly raised by the load unit on the tail lift, whereafter the bars 15 will be moved back to their first position and the tail lift will be raised further to the level of the deck 12, so permitting the two load units to be moved back onto the deck 12.

The same principle of operation can be used to permit delivery of the uppermost load unit of a stack, and of course where two units of a three unit stack are to be delivered then again a similar principle of operation can be employed. In each instance the need for a fork lift truck is completely obviated.

Figure 6 illustrates a convenient arrangement of the load support. The deck 14 of the trailer is provided with a pair of parallel, longitudinally extending steel channel section members 16, the two members 16 being positioned with their base web vertical, and their open faces presented to one another. (Certain articulated lorry trailers, and rigid deck lorries, may include convenient channel section members 16 as part of their original construction). The load support is supported and guided by the channel section members 16 and comprises the two rectangular section bars 15 secured parallel to one another by a pair of spaced, transversely extending rigid ties 17. The ties 17 extend between the innermost faces of the bars 15, and rotatably mounted on the outermost face of each bar 15 is a longitudinally spaced pair of support wheels 18, the support wheels 18 being received in the channels 16 respectively. The wheels 18 rotate about axes which are generally horizontal in use, and secured to the lower face of each bar 15 is a longitudinally spaced pair of guide rollers 19, the guide rollers 19 rotating about axes which are generally vertical in use, and engaging the inner edges of the lowermost walls of the channels 16.

The wheels 18 and rollers 19 remain in contact with the channel members 16 throughout the whole range of movement of the load support and in particular the longitudinal spacing between the wheels 18 is chosen to ensure adequate load bearing capability in the extended position of the bars 15.

Any convenient mechanism can be provided for extending· and retracting the bars 15. However conveniently one or both of the ties 17 will be provided with a tag for connection to a roller chain running beneath the ties. The roller chain is an endless chain, and extends around a pair of sprockets positioned with their axes lying in a plane parallel to the plane of the deck 12, and a further sprocket mounted for rotation about a horizontal axis, and positioned below the level of the other two sprockets. The third sprocket will be connected to a winding handle operable by the driver of the vehicle. Rotation of the handle in one direction will cause the bars 15 to be extended while rotation in the opposite direction will result in retraction of the bars. Clearly, a powered mechanism could be provided if desired.

The terms "palletized" and "pallet" used herein in relation to the load units are intended to be construed sufficiently broadly to encompass those forms of load supporting arrangements normally associated with handling of loads by a fork lift truck. Thus included within these terms are conventional pallets either attached to or integral with the load or alternatively merely interposed between loads, and also included are load units in a vertical stack each separated from its vertical neighbour by simple wooden laths which act as spacers normally permitting the introduction of the forks of a fork lift truck between units. The above terms also include those forms of load where a packing case or the like is formed with apertures for the reception of the forks of a lift truck.

## Claims

1. A transporter for palletized loads comprising a load carrying platform (12), and a load lifting mechanism (14) adjacent an edge of the platform (12) whereby load units (13) can be raised and lowered between the platform level and ground level, a load unit support (15) movable between a first position in which the support (15) is clear of the path of movement of the lifting mechanism (14) and a second position in which the support (15) can engage a load unit (13) carried by the lifting mechanism (14) to support that unit, characterized in that said load lifting mechanism (14) includes a load lifting platform upon which said load units are raised and lowered, and said load unit support (15) includes a pair of spaced parallel limbs engageable with a load unit (13), which are required to be in said first position to permit said load lifting platform to pass during movement of the load lifting platform.

2. A transporter as claimed in claim 1 characterized in that said load unit support (15) is retractable relative to the load carrying platform (12) from its second position to its first position, the support (15) lying beneath the load carrying surface of the platform (12) in its first position.

3. A transporter as claimed in claim 1 or 2 characterized in that there is provided a mechanism for moving the load unit support (15) between said first and second positions.

4. A transporter as claimed in claim 3 characterized in that said mechanism for moving the load unit support (15) is manually operable from a location adjacent the load lifting mechanism (14).

## Revendications

1. Transporteur de charges palettisées, comprenant une plate-forme porte-charge (12), un mécanisme de levage de charge (14) disposé au voisinage d'un bord de la plate-forme (12) et avec lequel des unités de charge (13) peuvent être élevées et descendues entre le niveau de la plate-forme et le niveau du sol et un support d'unité de charge (15) mobile entre une première position dans laquelle le support (15) est dégagé de la trajectoire du mécanisme de levage (14) et une seconde position dans laquelle le support (15) peut s'engager sous une unité de charge (13) portée par le mécanisme de levage (14) afin de soutenir cette unité, caractérisé en ce que ledit mécanisme de levage de charge (14) comprend une plate-forme de levage de charge sur laquelle lesdites unités de charge sont élevées et descendues, et en ce que ledit support d'unité de charge (15) comprend une paire de bras parallèles espacés pouvant s'engager sous une unité de charge (13), lesquels doivent être à ladite première position pour permettre à ladite plateforme de levage de charge de passer au cours de son déplament.

2. Transporteur selon la revendication 1, caractérisé en ce que ledit support d'unité de charge (15) peut être rentré par rapport à la plate-forme porte-charge (12) de sa seconde position à sa première position, le support (15) reposant dans sa première position sous la surface porte-charge de la plate-forme (12).

3. Transporteur selon la revendication 1 ou 2, caractérisé en ce qu'il est prévu un mécanisme pour déplacer le support d'unité de charge (15) entre lesdites première et seconde positions.

4. Transporteur selon la revendication 3, caractérisé en ce que ledit mécanisme pour déplacer le support d'unité de charge (15) est actionnable manuellement à partir d'un point voisin du mécanisme de levage de charge (14).

**Patentansprüche**

1. Transporteinrichtung für auf Paletten gestapelte Lasten mit einer Lastaufnahmeplattform (12) und einem angrenzend an eine Kante der Plattform (12) angeordneten Lasthebemechanismus (14), wodurch Lasteinheiten (13) zwischen einem Plattformniveau und einem Bodenniveau angehoben und abgesenkt werden können, und mit einem Lasteinheitträger (15), der zwischen einer ersten Position, in der er sich außerhalb des Weges der Bewegung des Lasthebemechanismus (14) befindet, und einer zweiten Position bewegbar ist, in der er eine Lasteinheit (13) erfassen kann, die von dem Lasthebemechanismus (14) getragen wird, um diese Einheit zu tragen, dadurch gekennzeichnet, daß der Lasthebemechanismus (14) eine Lasthebeplattform umfasst, auf der die Lasteinheiten angehoben und abgesenkt werden, und daß der Lasteinheitträger (15) zwei im Abstand voneinander und parallel zueinander angeordnete Schenkel aufweist, die in Eingriff mit einer Lasteinheit (13) bringbar sind, und die in der ersten Position sein müssen, um ein Passieren der Lasthebeplattform bei einer Bewegung derselben zu gestatten.

2. Transporteinrichtung gemäß Anspruch 1, dadurch gekennzeichnet, daß der Lasteinheitträger (15) bezüglich der Lastaufnahmeplattform (12) aus seiner zweiten Position in seine erste Position zurückziehbar ist und daß der Lasteinheitträger (15) in seiner ersten Position unterhalb der lasttragenden Oberfläche der Plattform (12) liegt.

3. Transporteinrichtung gemäß Anspruch 1 oder 2, dadurch gekennzeichnet, daß ein Mechanismus zum Bewegen des Lasteinheitträgers (15) zwischen seinen beiden Positionen vorgesehen ist.

4. Transporteinrichtung gemäß Anspruch 3, dadurch gekennzeichnet, daß der Mechanismus zum Bewegen des Lasteinheitträgers (15) aus einer dem Lasthebemechanismus (14) benachbarten Position heraus von Hand betätigbar ist.

FIG.1.

FIG.2.

FIG.3.

FIG.4.

FIG.5.

FIG.6.